# EUROPÄISCHE PATENTSCHRIFT

(11) **EP 3 810 541 B1**
(45) Veröffentlichungstag und Bekanntmachung des Hinweises auf die Patenterteilung: **25.01.2023**
(21) Anmeldenummer: 19731976.7
(22) Anmeldetag: 18.06.2019
(51) Int. Cl.: B66C 21/00, B66C 11/16, B66D 1/26, B66D 1/20, B66C 9/02, B66C 11/24, B66C 9/18, B66D 1/12, B66D 1/22, A01G 23/00, B61B 7/02

(54) **UNIVERSALLAUFWAGEN MIT ZWANGSAUSSPULUNG DES ZUGSEILS BEZIEHUNGSWEISE DES HUBSEILES IM 2- UND 3-SEILBETRIEB**
UNIVERSAL CARRIAGE WITH ENFORCED SPOOLING OUT OF THE TRACTION CABLE AND/OR OF THE HOISTING CABLE IN 2- AND 3-CABLE OPERATION
CHARIOT UNIVERSEL COMPRENANT UN DÉROULEMENT PAR CONTRAINTE DU CÂBLE DE TRACTION OU DU CÂBLE DE LEVAGE DANS UN FONCTIONNEMENT À 2 ET À 3 CÂBLES

(30) Priorität: 19.06.2018 AT 504892018
(43) Veröffentlichungstag der Anmeldung: 28.04.2021
(73) Patentinhaber: MM Forsttechnik GmbH, 8130 Frohnleiten (AT)
(72) Erfinder: VERWANGER, Peter, 8041 Graz (AT); EHRENHÖFER, Willibald, 8010 Graz (AT)
(74) Vertreter: Gruber, Philipp
(86) Internationale Anmeldenummer: PCT/EP2019/065965
(87) Internationale Veröffentlichungsnummer: WO 2019/243302

(56) Entgegenhaltungen:
- EP-A1- 0 274 555
- AT-B- 401 169
- US-A- 3 523 615
- US-A- 4 453 642

## Beschreibung

### GEBIET DER ERFINDUNG

Die Erfindung betrifft einen Laufwagen eines Seilkrans zum Transport von Lasten entlang eines Tragseils des Seilkrans, wobei der Laufwagen, der in einem 2-Seilbetrieb von einem Zugseil und in einem 3-Seilbetrieb zusätzlich von einem Hilfsseil entlang des Tragseils von einem Seilgerät des Seilkrans gezogen wird, einen Motor zum Ausspulen des Zugseils oder eines Hubseils aus dem Laufwagen aufweist und eine Reibscheibe, die zur ausspulenden Bewegung des Zugseils, und/oder eine Hubseiltrommel, die zur ausspulenden Bewegung des Hubseils, vorgesehen ist und vom Motor mittelbar oder unmittelbar angetrieben wird.

### BESCHEIBUNG DES STANDES DER TECHNIK

Seilkräne dienen in der Forstwirtschaft zum Abtransport von gefällten Bäumen, Teilen von Bäumen oder anderen Lasten aus unwegsamen Gelände und werden in unterschiedlichen Betriebsweisen mit unterschiedlichen Bauarten von Laufwägen betrieben. In der einfachsten Form wird ein Seilkran im 2-Seilbetrieb mit nur zwei Seilen betrieben. Es wird ein Tragseil gespannt, auf dem ein Laufwagen mit Laufrollen verschiebbar gelagert ist, wobei der Laufwagen durch die Schwerkraft angetrieben bergab fährt und mit einem Zugseil samt Last, beispielsweise einem gefällten Baum, wieder bergauf gezogen wird. Beim Bergaufseilen wird die Last zum höher gelegenen Ende des Tragseils und beim Bergabseilen zum tieferen Ende des Tragseils transportiert. Hierfür steht ein Seilgerät beziehungsweise eine Zugseilwinde des Seilkrans beim Bergaufseilen üblicherweise am höher gelegenen Ende des Tragseils und beim Bergabseilen üblicherweise am tiefer gelegenen Ende des Tragseils. Bei dem 3-Seilbetrieb wird ein den Laufwagen zum tiefer gelegenen Ende des Tragseils ziehendes Hilfsseil als drittes Seil verwendet. Das Hilfsseil wird üblicherweise von dem Laufwagen zum tiefer gelegenen Ende des Tragseils und beim Bergaufseilen von dort über eine Rolle zum höher gelegenen Endes des Tragseils zu dem dort angeordneten Seilgerät geführt. Das Verlegen des Hilfsseils ist aufwändig, weshalb insbesondere zum Bergaufseilen der 2-Seilbetrieb vor allem bei häufigem Auf- und Abbau der Seilkrananlage bevorzugt wird.

Um das Ende des Zugseils zu dem gegebenenfalls weit von dem Tragseil und dem Laufwagen entfernt liegenden gefällten Baum zu ziehen, muss das Zugseil in der einfachsten Ausführung manuell von einem Holzarbeiter durch den Laufwagen zur Last gezogen werden. Diese Arbeit ist vor allem bei weiten Abspannungen anstrengend. Nach dem Befestigen der Last wird beim anschließenden Zuziehen des Zugseiles zuerst die Last unter den Laufwagen gezogen, dann zum Laufwagen angehoben und anschließend wird der Laufwagen samt Last bergauf zum Seilgerät gezogen. Für weitere Abspannungen beziehungsweise längere Trag- und Zugseile werden Laufwägen mit Zwangsausspulung benötigt, weil das manuelle Ausspulen aufgrund der für das Ausspulen notwendigen hohen Zugkraft zu anstrengend ist oder sogar unmöglich wäre. Beim Bergaufseilen hilft die auf das Zugseil wirkende Schwerkraft das vom höheren Ende des Tragseils durch den Laufwagen geführte Zugseil auszuspulen. Beim Bergabseilen hingegen wirkt die Schwerkraft in Summe entgegen der Ausziehrichtung des Zugseils, da mit dem am tieferen Ende des Tragseils angeordneten Seilgerät das Zugseil entgegen der Schwerkraft entlang des gesamten Tragseils nach oben und nur zum Teil der Länge des Tragseils bis zum Laufwagen wieder nach unten geführt ist. Folglich ist insbesondere für das Bergabseilen eine Zwangsausspulung des Zugseils unbedingt erforderlich.

Dem Fachmann sind Laufwägen bekannt, bei denen im Laufwagen eine Hubseilwinde angeordnet ist, die dieselmotorisch bzw. dieselhydraulisch angetrieben wird. Diese Winden können das Hubseil, mit dem die Last zum Laufwagen zugezogen wird, auch aktiv ausspulen. Diese Laufwägen haben den Nachteil, dass für den Zuzug eine sehr hohe Leistung und damit große Motoren notwendig sind. Außerdem beinhaltet der Laufwagen das gesamte Hubseil auf einer Hubseilwinde. Motor und Hubseilwinde haben ein erhebliches Gewicht und machen solche Laufwägen sehr schwer. Verbrennungsmotoren sind außerdem bei Schrägstellungen anfällig auf Motorschäden. Die Ausspullänge ist auf die Länge des auf der Hubseiltrommel aufgerollten Hubseiles begrenzt.

Weiters kennt der Fachmann für den 3-Seilbetrieb vorgesehene Laufwägen, bei denen das Hilfsseil zum Ausspulen des Zugseils verwendet wird. Da zum Bergaufseilen der 2-Seilbetrieb im Allgemeinen ausreichend ist und das Verlegen des Hilfsseils mit zusätzlichem Aufwand verbunden ist, werden für das Bergaufseilen oft andere Laufwägen verwendet, was nachteiligerweise das Lagern und Instandhalten von unterschiedlichen Laufwagentypen erforderlich macht.

Weiters kennt der Fachmann Laufwägen, bei denen das Zugseil über eine Reibscheibe ausgespult wird, die von einem Diesel-, Hydraulik- oder Elektromotor angetrieben wird. Dokument AT 512 872 B1 offenbart so einen Laufwagen mit einem Elektromotor zum Ausspulen des Zugseils. Bei Ausführung mit Hydraulik- oder Elektromotor wird üblicherweise ein Energiespeicher im Laufwagen beim Zuzug des Zugseiles wieder aufgeladen. Laufwägen mit dieselmotorischem Ausspuler sind meist sehr schwer. Dieselmotoren sind weiters aufgrund mangelhafter Ölversorgung bei Schräglage des Laufwagens anfällig für Motorschäden. Laufwägen mit hydraulischem oder elektrischem Ausspuler sind aufgrund der niedrigen Ausspulkraft meist nur für das Bergaufseilen geeignet. Beim Bergabseilen ist die mögliche Abspannlänge bzw. Ausspulgeschwindigkeit deutlich eingeschränkt, da die dafür nötige Ausspulkraft durch hohe Untersetzungen zwischen Antriebsmotor und Reibscheibe ermöglicht wird. Bei Verwendung von Hydraulikspeichern bei hydraulischem Antrieb bzw. von Kondensatoren bei elektrischem Antrieb ist außerdem die Ausspullänge begrenzt.

US 4 453 642 A offenbart einen Laufwagen eines Seilkrans zum Transport von Lasten entlang eines Tragseils des Seilkrans wobei der Laufwagen von einem Zugseil und von einem Hilfsseil entlang des Tragseils von einem Seilgerät des Seilkrans gezogen wird. Ein Motor wird zum Ausspulen des Zugseils aus dem Laufwagen angeordnet. Eine Scheibe, welche zur ausspulenden Bewegung des Zugseils vorgesehen ist, wird vom Motor angetrieben.

### AUFGABENSTELLUNG

Es ist daher Aufgabe der vorliegenden Erfindung einen Laufwagen für Seilkräne zu schaffen, der eine zuverlässige Zwangsausspulung des Zugseils für die in der Forstwirtschaft benötigten unterschiedlichen Betriebsweisen ermöglicht.

### LÖSUNG DER AUFGABENSTELUNG

Die der vorliegenden Erfindung zugrundeliegende Aufgabenstellung wird durch einen Laufwagen gelöst, der eine Hilfsseiltrommel zum Aufspulen des Hilfsseils im 3-Seilbetrieb aufweist und bei dem die Hilfsseiltrommel in Wirkverbindung mit der Reibscheibe steht und durch das Hilfsseil angetrieben wird und zusätzlich oder alternativ von einem Motor zum Ausspulen des Zugseils angetrieben wird.

Obwohl mobile Seilkräne mit Laufwägen bereits seit vielen Jahrzehnten in der Forstwirtschaft zum Einsatz kommen, wird erstmals durch den erfindungsgemäßen Laufwagen die Möglichkeit geschaffen mit nur einem Laufwagen sowohl beim Bergaufseilen als auch beim Bergabseilen und sowohl bei Anwendung des 2-Seilbetriebs als auch bei Anwendung des 3-Seilbetriebs immer eine zuverlässige Zwangsausspulung des Zugseils zu ermöglichen. Die bei unterschiedlichen Hanglagen, Lasten und Betriebsweisen jeweils vorteilhafteste Seiltechnik kann mit nur einem Laufwagen mit einer zuverlässigen Zwangsausspulung des Zugseils bzw. des Hubseiles frei gewählt werden. Es kann die üblicherweise größere Ausspulkraft des Hilfsseils im 3-Seilbetrieb oder die üblicherweise geringere Ausspulkraft eines Elektromotors in dem 2- oder 3-Seilbetrieb gemeinsam oder einzeln genutzt werden. Besonders vorteilhaft ist, dass, wenn der Energiespeicher des Elektromotors leer ist, von der Zwangsausspulung des Zugseils durch den Elektromotor auf die Zwangsausspulung durch das Hilfsseil gewechselt werden kann, wodurch ein zuverlässiger Betrieb des Seilkrans gewährleistet ist.

Laufwägen gemäß dem Stand der Technik weisen immer nur eine Antriebsart zum Ausspulen des Zugseils auf und versuchen damit möglichst alle Betriebsweisen abzudecken, wodurch sich die damit einhergehenden Nachteile ergeben. Bei elektromotorischen Antrieben werden leistungsstarke Antriebe oder hohe Untersetzungen verwendet, die zu erhöhtem Gewicht, langsamen Ausspulgeschwindigkeiten und kurzen Ausspullängen führen. Der erfindungsgemäße Laufwagen geht von diesem Prinzip ab und sieht zwei Antriebsarten vor, wobei bewusst ein relativ antriebsschwacher Elektromotor und/oder eine geringere Untersetzung gewählt werden kann, der im Anlassfall unterstützt durch das Hilfsseil auch große Längen des Zugseils rasch ausspulen kann. Hierdurch kann zusätzlich das Gewicht des Laufwagens reduziert werden, wodurch der Energieverbrauch des Laufwagens und/oder des Seilgeräts sinkt.

Besonders vorteilhaft ist es den Elektromotor nicht nur zum Ausspulen des Zugseils, sondern auch zum Aufspulen des Hilfsseils auf der Hilfsseiltrommel zu nutzen. Bei herkömmlichen Laufwägen, die das Hilfsseil zum Ausspulen des Zugseils nutzen, ist dies nur durch ein zeitaufwändiges und fehleranfälliges mechanisches Verfahren unter Ausnutzung der Zugkraft des Zugseils oder überhaupt nur händisch möglich.

Vorteilhafte und nicht einschränkende Ausführungsbeispiele der Erfindung werden nachfolgend anhand der Zeichnungen näher erläutert.
Figur 1 zeigt das Bergaufseilen eines Baumes im 2-Seilbetrieb.
Figur 2 zeigt das Bergaufseilen eines Baumes im 3-Seilbetrieb.
Figur 3 zeigt das Bergabseilen eines Baumes im 3-Seilbetrieb.
Figur 4 zeigt einen erfindungsgemäßen Laufwagen gemäß einem ersten Ausführungsbeispiel der Erfindung.
Figur 5 zeigt die wesentlichen Teile des Laufwagenunterteils gemäß Figur 4 in einer Schrägansicht.
Figur 6 zeigt die wesentlichen Teile des Laufwagenunterteils gemäß Figur 4 in einer Seitenansicht.
Figur 7 zeigt die wesentlichen Teile des Laufwagenunterteils gemäß Figur 4 in einer Draufsicht.
Figur 8 zeigt die wesentlichen Teile des Laufwagenunterteils und einzelne Teile des Laufwagenoberteils gemäß Figur 4 in einer Schrägansicht im 2-Seilbetrieb.
Figur 9 zeigt die wesentlichen Teile des Laufwagenunterteils und einzelne Teile des Laufwagenoberteils gemäß Figur 4 in einer Schrägansicht im 3-Seilbetrieb.
Figuren 10 und 11 zeigen die wesentlichen Teile eines Laufwagens gemäß einem zweiten Ausführungsbeispiel der Erfindung mit integrierter Hubseilwinde und Ausspülung motorisch und/oder über das Hilfsseil und Zuzug motorisch und/oder über das Zugseil.

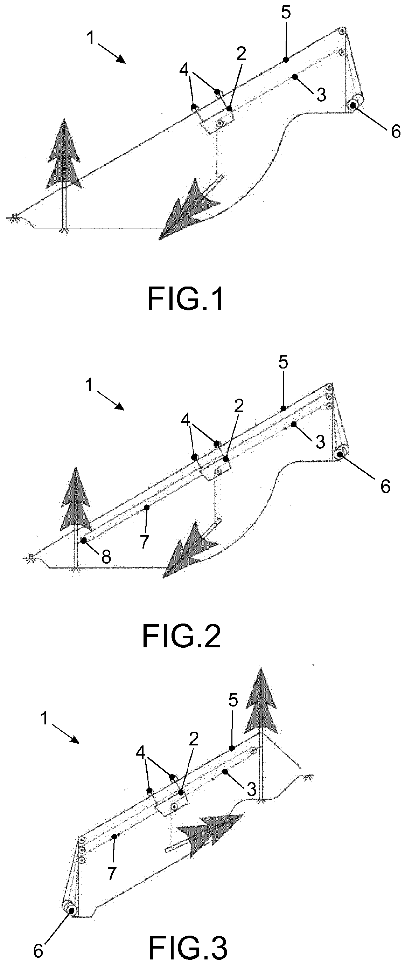

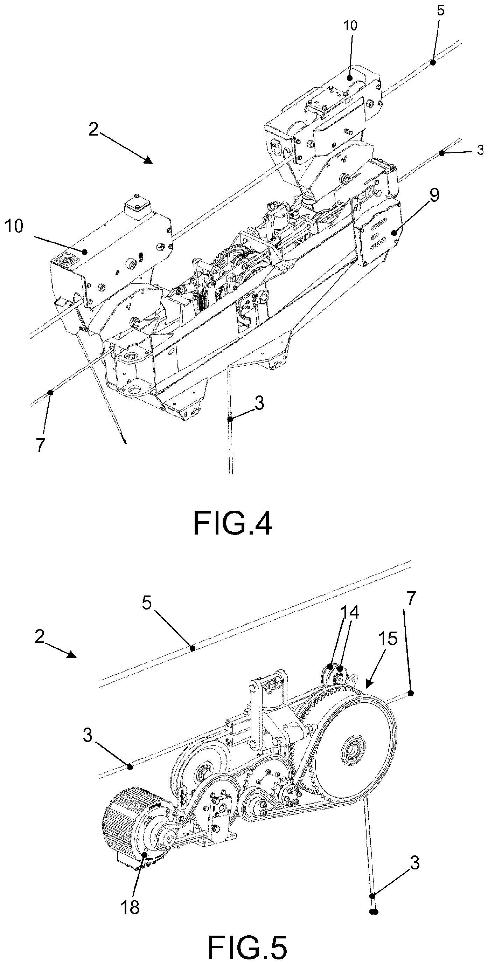

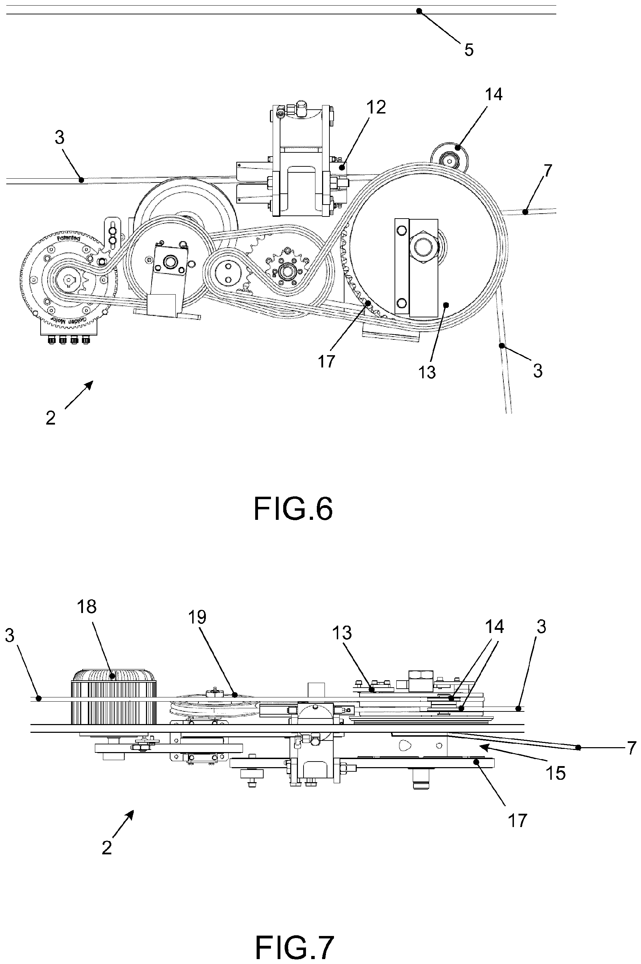

Die Figuren 1 bis 3 zeigen unterschiedliche Betriebsweisen zum Abtransport eines gefällten Baumes aus unwegsamen Gelände mit einem Seilkran 1. Ein in den Figuren 4 bis 9 dargestellter erfindungsgemäßer Laufwagen 2 kann bei allen diesen Betriebsweisen zum Einsatz kommen und dabei das Zugseil zwangsausspulen. Figur 1 zeigt das Bergaufseilen eines Baumes mit dem Seilkran 1 im 2-Seilbetrieb, bei dem der Laufwagen 2 mit einem Zugseil 3 auf Laufrollen 4 entlang eines Tragseils 5 gezogen wird. Ein Seilgerät 6 ist am höher gelegenen Ende des Tragseils 5 vorgesehen und zieht den Baum samt Laufwagen 2 nach oben, wobei der Baum bergauf geseilt wird. Die Schwerkraft sorgt dafür, dass der leere Laufwagen 2 entlang des Tragseils wieder bergab geseilt werden kann, um den nächsten Baum anzuseilen.

Figur 2 zeigt das Bergaufseilen eines Baumes mit dem Seilkran 1 im 3-Seilbetrieb, bei dem das Bergabseilen des leeren Laufwagens 2 mit der Hilfe eines Hilfsseils 7 durchgeführt wird. Das Hilfsseil 7 wird vom Laufwagen 2 über eine Rolle 8 am tiefer gelegenen Ende des Tragseils 5 parallel zum Tragseil 5, oder über einen anderen Weg, zum Seilgerät 6 geführt und von diesem angetrieben.

Figur 3 zeigt das Bergabseilen eines Baumes mit dem Seilkran 1 im 3-Seilbetrieb, bei dem die Seilwinde 6 am tiefer gelegenen Ende des Tragseils 5 angeordnet ist, weshalb das Hilfsseil 7 kurz und das Zugseil 3 lang geführt ist.

Der in den Figuren 4 bis 9 dargestellte Laufwagen 2 besteht im Wesentlichen aus einem Laufwagenunterteil 9 und zwei Lauwagenoberteilen 10. In den Laufwagenoberteilen 10 befinden sich jeweils zwei Laufrollen 4, die auf dem Tragseil 5 laufen. Der Laufwagenunterteil 9 hängt an den beiden Laufwagenoberteilen 10. In einem Lauwagenoberteil 10 ist zusätzlich zu den beiden Laufrollen 4 eine Tragseilklemme 11 angeordnet, mit der sich der Laufwagen 2 am Tragseil 4 fixieren lässt. Im anderen Laufwagenoberteil 10 ist ein Hydrauliköltank und eine Hydraulikpumpe angeordnet, die über die Laufrollen 4 angetrieben wird und die einen Druckspeicher lädt, der im Laufwagenunterteil 9 angeordnet ist und die hydraulischen Klemmen und den Sperrzylinder versorgt. Als hydraulische Klemmen ist eine Zugseilklemme 12 zum Klemmen des Zugseils 3 und eine Hilfsseilklemme 16 zum Klemmen des Hilfsseils 7 vorgesehen.

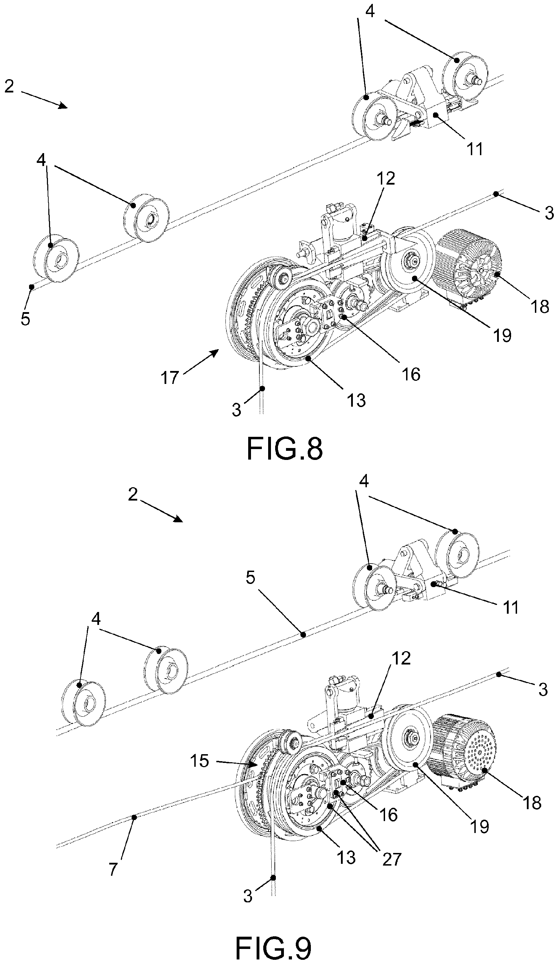

Die Figur 8 zeigt den Laufwagen 2, der im 2-Seilbetrieb bergauf oder bergab mit Zwangsausspulung des Zugseils 3 betrieben wird. Der Laufwagen 2 ist mit den Laufrollen 4 verschieblich am Tragseil 5 gelagert. Das Zugseil 3 wird derart durch den Laufwagen 2 geführt, dass es eine Reibscheibe 13 ausreichend umschlingt. Dafür wird das Zugseil 3 im Laufwagen 2 über die Umlenkrolle 19 geführt und ein weiteres Mal über die Reibscheibe 13 geleitet. Das Zugseil 3 wird zusätzlich durch zwei Anpressrollen 14 auf die Reibscheibe 13 gepresst, wodurch die Reibung zwischen Reibscheibe 13 und Zugseil 3 noch weiter erhöht wird. Die Reibscheibe 13 weist zur zusätzlichen Erhöhung der Reibkräfte V-förmige Nuten auf, in denen das Zugseil 3 geführt wird. Je nach Ausführung der Nuten und Anpressdruck durch die Anpressrollen kann eine Umschlingung des Zugseils 3 um die Reibscheibe 13 von nur 90° oder auch bis zu 450° und mehr vorteilhaft sein, um die notwendige Reibung zu erlagen.

Die Reibscheibe 13 ist gemeinsam mit einer Hilfsseiltrommel 15 auf einer Achse im Laufwagenunterteil 9 gelagert. Zwischen Reibscheibe 13 und Hilfsseiltrommel 15 ist ein Freilauf mit Klinkenmechanismus angeordnet, der die Verdrehung der Reibscheibe 13 zur Hilfsseiltrommel 15 in eine Richtung ermöglicht und in die andere Richtung sperrt. Die Hilfsseiltrommel 15 weist auf ihren beiden Wangen jeweils eine Verzahnung auf. Eine Sperrverzahnung auf der der Reibscheibe 13 zugewandte Wange der Hilfsseiltrommel 15 dient der Sperre der Hilfsseiltrommel 15 durch einen Sperrzylinder und ein Sperrsegment, die gemeinsam die Hilfsseilklemme 16 bilden. Eine Kettenverzahnung 17 auf der gegenüberliegenden Wange dient dem Antrieb der Hilfsseiltrommel 15 über einen Kettentrieb durch einen Elektromotor 18. Der Kettentrieb ist zweistufig ausgeführt, um eine ausreichende Untersetzung zwischen dem Elektromotor 18 und der Hilfsseiltrommel 15 zu ermöglichen.

Bei dem 2-Seilbetrieb wird kein Hilfsseil 7 eingesetzt. Die Hilfsseiltrommel 15 ist deshalb leer. Zum Ausspulen des Zugseils 3 wird zuerst der Laufwagen 2 an der passenden Stelle, wo ausgespult werden soll, mit Hilfe der Tragseilklemme 11 am Tragseil 5 fixiert. Danach wird die Zugseilklemme 12 geöffnet. Nun treibt der Elektromotor 18, entsprechend angesteuert vom einem Controller des Laufwagens 2, über den Kettentrieb die Hilfsseiltrommel 15 an, die wiederum die Reibscheibe 13 antreibt, wodurch das Zugseil 3 aus dem Laufwagen 2 ausgespult wird. Der Seilkran 1 muss die dafür notwendige Menge an Zugseil 3 ausgeben. Der Elektromotor 18 wird aus dem Akku, der sich ebenfalls im Laufwagen 2 befindet, mit der erforderlichen Energie versorgt. Der Controller ist Teil einer Steuereinrichtung des Laufwagens 2, die mittels Funksignalen von einer Bedienperson am Boden ferngesteuert werden kann.

Beim Zuzug treibt nun das Zugseil 3 die Reibscheibe 13 in die entgegengesetzte Richtung an. Die Reibscheibe 13 wiederum treibt die Hilfsseiltrommel 15 und damit über den Kettentrieb den Elektromotor 18 an. Der Elektromotor 18 wird nun so vom Controller angesteuert, dass er als Generator betrieben wird. Der generierte Strom lädt damit beim Zuziehen des Zugseiles 3 den Akku wieder auf. Der Zuzug des Zugseiles 3 wird vom Seilgerät 6 bewerkstelligt. Idealerweise ist der Elektromotor 18 derart dimensioniert, dass die Ladung des Akkus alleine durch den Generatorbetrieb beim Zuzug bewerkstelligt werden kann und keine zusätzliche Ladung des Akkus notwendig ist.

Nach dem Zuzug des Zugseiles 3 und Anheben der Last wird die Zugseilklemme 12 geschlossen. Danach wird die Tragseilklemme 11 geöffnet und der Laufwagen 2 samt Last bei weiterem Zuzug des Zugseiles 3 entlang des Tragseiles 5 in Richtung des Seilgeräts 6 verschoben.

Figuren 4 bis 7 und 9 zeigen den gleichen Laufwagen 2 im 3-Seilbetrieb. In diesem Betrieb wird nun ein weiteres Seil, das Hilfsseil 7 vom Seilgerät 6 über Umlenkrollen im Umlauf derart geführt, dass es von der dem Zugseil 3 gegenüberliegenden Seite des Laufwagens 2 in den Laufwagen 2 geführt wird und teilweise auf der Hilfsseiltrommel 15 im Laufwagen 2 aufgespult ist. Zum Ausspulen des Zugseiles 3 wird nun der Laufwagen 2 wieder an der passenden Stelle am Tragseil 5 mit Hilfe der Tragseilklemme 11 fixiert. Die Zugseilklemme 12 wird geöffnet. Nun wird gleichzeitig am Seilgerät 6 am Hilfsseil 7 gezogen und das Zugseil 3 ausgegeben. Durch den Zug am Hilfsseil 7 wird die Hilfsseiltrommel 15 in Drehung versetzt. Dabei spult sich das Hilfsseil 7 von der Hilfsseiltrommel 15 ab. Die Reibscheibe 13 ist über den eine Wirkverbindung bildenden Freilauf mit der Hilfsseiltrommel 15 gekoppelt und wird nun ebenfalls durch das Hilfsseil 7 angetrieben. Das Zugseil 3 wird durch die sich drehende Reibscheibe 13 ausgespult. Beim Zuzug des Zugseiles 3 in gegengesetzte Richtung treibt nun das Zugseil 3 die Reibscheibe 13 und damit über den Freilauf auch die Hilfsseiltrommel 15 an, wodurch das Hilfsseil 7 wieder auf der Hilfsseiltrommel 15 im Laufwagen 2 aufgespult wird. Dafür muss am Seilgerät 6 das Hilfsseil 7 ausgegeben werden.

Zwischen Zugseil 3 und Reibscheibe 13 herrscht Schlupf. Dadurch reduziert sich laufend im Betrieb die Länge des auf der Hilfsseiltrommel 15 aufgespulten Hilfsseiles 7 und damit auch die mögliche Ausspullänge des Zugseiles 3. Zum erneuten Aufspulen des Hilfsseiles 7 auf der Hilfsseiltrommel 15 wird zuerst das Zugseil 3 z.B. an einem Baum befestigt. Danach wird die Drehung der Hilfsseiltrommel 15 durch Eingriff des Sperrsegmentes in die Sperrverzahnung auf der einen Wange der Hilfsseiltrommel 15 gesperrt. Nun wird die Zugseilklemme 12 geöffnet und der Laufwagen 2 mit Zug am Hilfsseil 7 entlang des Tragseil 5 in Richtung des Hilfsseiles 7 verschoben. Dadurch wird nun Zugseil 3 durch den Laufwagen 2 hindurch gezogen, ohne dass sich die Hilfsseiltrommel 15 dreht und Hilfsseil 7 abgespult wird. Das wird erst durch den Freilauf ermöglicht, da nun die Drehrichtung der Reibscheibe 13 gegenüber der Hilfsseiltrommel 15 in Freilaufrichtung erfolgt. Zum Aufspulen des Hilfsseiles 7 wird die Sperre der Hilfsseiltrommel 15 gelöst und das Zugseil wieder vom Seilgerät 6 zugezogen, wodurch nun wieder eine größere Länge an Hilfsseil 7 auf der Hilfsseiltrommel 15 aufgespult wird und bei den folgenden Ausspulungen wieder eine größere Ausspullänge erzielt werden kann.

Beim Bergaufseilen im 2-Seilbetrieb wird die Reibscheibe 13 elektromotorisch angetrieben. Für diesen Betriebsfall ist nur eine geringe Ausspulkraft nötig. Der Elektromotor 18 kann entsprechend klein dimensioniert werden. So kann die Leistung des Elektromotors 18 beispielsweise bei 5.000 Watt liegen. Diese Betriebsweise ist in Figur 8 dargestellt.

Beim Bergaufseilen im 3-Seilbetrieb wird die Reibscheibe 13 wahlweise, je nach erforderlicher Ausspulkraft und Ausspullänge, durch den Elektromotor 18 oder über das Hilfsseil 7 angetrieben. Die Ausspülung mit Antrieb über das Hilfsseil 7 ist in Figur 9 dargestellt. Beim Bergaufseilen im 3-Seilbetrieb mit elektrischer Ausspülung ist das Hilfsseil nicht an der Hilfsseiltrommel 15 befestigt, sondern am Laufwagenunterteil 9 selbst. Wenn aufgrund der großen Länge des Tragseils 5 oder anderen Umständen mit der Notwenigkeit einer besonders großen Ausspulkraft gerechnet wird, dann wird das Hilfsseil 7 auf der Hilfsseiltrommel 15 aufgerollt und vorerst durch Antrieb durch das Hilfsseil 7 das Zugseil 3 ausgespult.

Beim Bergabseilen oder Seilen in der Ebene wird die Reibscheibe 13 vorzugsweise über das Hilfsseil 7 angetrieben. Soweit die Ausspulkraft bei Antrieb durch den Elektromotor 18 ausreicht, kann die Reibscheibe 13 auch beim Bergabseilen oder beim Seilen in der Ebene elektromotorisch angetrieben werden, wobei in dieser Betriebsweise das Hilfsseil 7 dann nicht an der Hilfsseiltrommel 15, sondern am Laufwagenunterteil 9 selbst befestigt ist.

Der Antrieb der Zwangsausspulung des Zugseils 3 kann, soweit eine sehr hohe Ausspulkraft nötig ist, die vom Hilfsseil 7 nicht alleine aufgebracht werden kann, auch kombiniert durch gleichzeitigen Antrieb durch das Hilfsseil 7 und den Elektromotor 18 erfolgen. In diesem Betriebsfall sind der Elektromotor 18 und die Hilfsseiltrommel 15 gemeinsam im Eingriff mit der Reibscheibe 13, um das Zugseil 3 auszuspulen. Besonders vorteilhaft ist, dass jederzeit funkferngesteuert der Elektromotor 18 zugeschaltet und die Ausspulkraft so weiter erhöht werden kann. Damit stellt der Laufwagen 2 eine Lösung bereit, die universell für jeden Betriebsfall eine geeignete Zwangsausspulung des Zugseiles 3 mit der für jeden Betriebsfall ausreichenden Ausspulkraft und Ausspulgeschwindigkeit bietet. Der Betrieb ist leise, unabhängig von der Lage des Laufwagens 2. Beim Ausspulen mit dem Elektromotor 18 ist die Ausspullänge unbegrenzt. Der elektromotorische Antrieb ist vorzugsweise für das Bergaufseilen gedacht. Er kann damit klein dimensioniert werden, wodurch das Gewicht des Laufwagens 2 reduziert wird. Der Antrieb mit dem Hilfsseil7 ist vorzugsweise für das Bergabseilen gedacht, wo eine hohe Ausspulkraft notwendig ist und soundso ein drittes Seil für das Seilen benötigt wird.

Es kann erwähnt werden, dass die Reibscheibe auch direkt vom Elektromotor angetrieben werden, und nicht über die Hilfsseiltrommel als Zwischenglied. Weiters könnte die Kraftübertragung zwischen Elektromotor und Hilfsseiltrommel bzw. Reibscheibe mit Hilfe eines Ketten-, eines Riemen- oder eines Zahnradtriebes erfolgen. Die Triebe können dabei je nach Untersetzungserfordernis ein- oder mehrstufig ausgeführt sein.

Alternativ zum Elektromotor kann der motorische Antrieb der Reibscheibe oder der Hilfsseiltrommel auch durch einen Verbrennungsmotor oder einen Hydraulikmotor vorgesehen sein. Der Hydraulikmotor kann dabei von einer Hydraulikpumpe direkt oder über einen Druckspeicher gespeist werden, wobei die Hydraulikpumpe von einem Elektro- oder Verbrennungsmotor angetrieben werden kann oder bei Verwendung eines Druckspeichers auch beim Zuzug des Zugseiles über die Reibscheibe angetrieben werden kann.

Die Hilfsseiltrommel und die Reibscheibe können auch starr miteinander verbunden bzw. drehfest gekoppelt sein bzw. trennbar gekuppelt ausgeführt sein. Sie können auch als ein gemeinsames einzelnes Bauteil, also einstückig ausgeführt sein.

An Stelle des Freilaufes kann auch eine per Funksignal schaltbare Kupplung bzw. ein schaltbarer Freilauf zwischen Reibscheibe und Hilfsseiltrommel angeordnet sein. Dadurch ist es möglich, die Reibscheibe und Hilfsseiltrommel zu entkoppeln und Hilfsseil auf der Hilfsseiltrommel motorisch aufzuspulen. Dadurch entfallen das aufwendige manuelle Aufspulen bzw. das maschinelle Aufspulen durch Auszug des Zugseiles bei gleichzeitiger Sperre der Hilfsseiltrommel.

Die Hilfsseiltrommel bzw. Reibscheibe kann auch durch einen Nabenmotor angetrieben werden. Hierdurch wird vorteilhafterweise eine besonders kompakte Bauweise des Laufwagens erzielt.

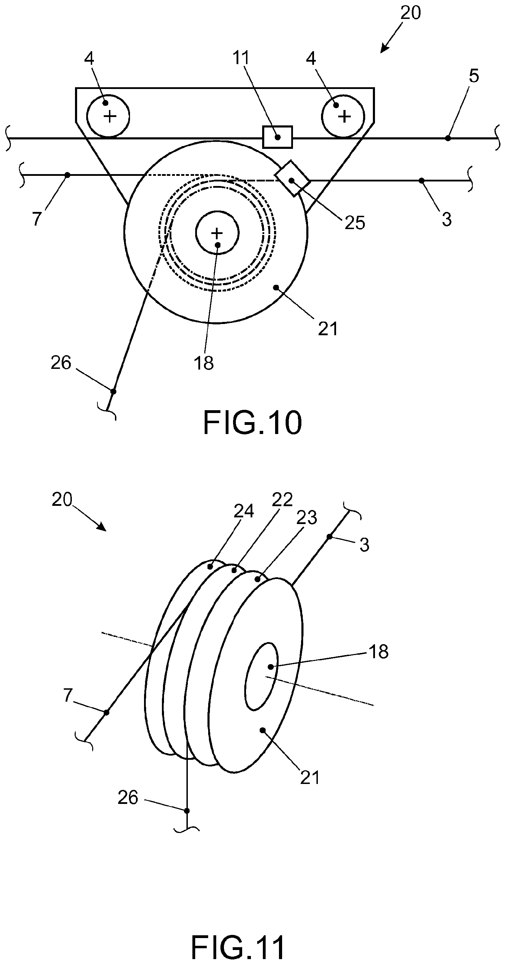

Figur 10 zeigt schematisch die wesentlichen Teile eines Laufwagens 20 gemäß einem zweiten Ausführungsbeispiel der Erfindung, und zwar im 3-Seilbetrieb, der vor allem beim Bergabseilen Anwendung findet. Der Laufwagen 20 beinhaltet eine Seiltrommel 21 mit drei Fächern, nämlich einem Hubseilfach 22, einem Zugseilfach 23 und einem Hilfsseilfach 24. Alternativ zu der einen Seiltrommel 21 mit drei Fächern können im Laufwagen 20 auch drei Seiltrommeln angeordnet sein, die miteinander derart gekoppelt sind, dass die Drehbewegung der einen Trommel jeweils eine Drehbewegung der anderen Trommeln bewirkt. Die drei Trommeln liegen vorteilhafterweise dabei auf einer gemeinsamen Achse. Sie können jedoch auch auf unterschiedlichen Achsen gelagert und über Triebe miteinander verbunden sein.

Weiters verfügt der Laufwagen 20 über eine Tragseilklemme 11 zur Fixierung des Laufwagens 20 am Tragseil 5, sowie über eine Bremse 25 für die Seiltrommel 21. Der Laufwagen 20 verfügt darüber hinaus über einen motorischen Antrieb der Seiltrommel 21, vorzugsweise einen elektrischen Antrieb, der die Seiltrommel 21 über einen Kettentrieb, einen Riementrieb, einen Zahnradtrieb oder beispielsweise als Nabenmotor auch direkt antreiben kann. Der motorische Antrieb ist bei dem Laufwagen 20 als Elektromotor 18 in der Hohlwelle der Seiltrommel 21 ausgebildet.

Ein Hubseil 26 des Laufwagens 20 dient zum Zuziehen und Anheben der Last zum Laufwagen 20. Mit dem Zugseil 3 und dem Hilfsseil 7 wird der Laufwagen 20 einerseits entlang des Tragseiles 5 verschoben. Andererseits dienen die beiden Seile auch dem Ausspulen und dem Zuziehen bzw. Anheben der Last zum Laufwagen 20.

Zum Aufnehmen einer Last wird zuerst der Laufwagen 20 bei geöffneter Tragseilklemme 11 und geschlossener Bremse 25 durch das Zugseil 3 und das Hilfsseil 7 entlang des Tragseiles 5 bis an die passende Stelle verschoben, wo die Last zugezogen und angehoben werden soll. Danach wird die Tragseilklemme 11 geschlossen und damit der Laufwagen 20 am Tragseil 5 fixiert. Nun wird die Bremse 25 geöffnet und durch Zug am Hilfsseil 7 und gleichzeitiger Ausgabe von Zugseil 3 durch das Seilgerät 6 die Seiltrommel 21 in Drehung versetzt, wodurch Hubseil 26 ausgespult und Zugseil 3 in dem Zugseilfach 23 beziehungsweise der Zugseiltrommel aufgespult wird. Zum Zuzug und Anheben der Last wird nun das Zugseil 3 von dem Seilgerät 6 eingezogen, wodurch die Seiltrommel 21 im Laufwagen 20 nun in entgegengesetzter Richtung in Drehung versetzt wird, damit das Hubseil 26 und Hilfsseil 7 eingezogen und auf der Seiltrommel 21 aufgespult wird. Vor Zuzug des Laufwagens 20 zum Seilgerät 6 wird nun die Bremse 25 geschlossen. Damit ist die Last am Laufwagen 20 fixiert. Die Tragseilklemme 11 wird geöffnet und der Laufwagen 20 wird beim Bergabseilen mit dem Hilfsseil 7, beim Bergaufseilen mit dem Zugseil 3 zum Seilgerät 6 gezogen, wobei das jeweils andere Seil ausreichend ausgegeben werden muss und beim Bergabseilen die Last auch bremsen muss.

Figur 11 zeigt schematisch nur die Seiltrommel 21, das Hubseil 26, Hilfsseil 7 und Zugseil 3, sowie den Elektromotor 18, um die Seilführung im Laufwagen 20 zu verdeutlichen. Die Seiltrommel ist als einstückige Seiltrommel 21 mit den drei Fächern für die einzelnen Seile ausgeführt, nämlich dem Hubseilfach 22, dem Hilfsseilfach 23 und dem Zugseilfach 24, in denen die jeweiligen Seile räumlich getrennt voneinander, jedoch miteinander gekoppelt gemeinsam gespult werden. Bei am Tragseil 5 fixiertem Laufwagen 20 und gelöster Bremse 25 wird bei Zug am Zugseil 3 das Hubseil 26 und das Hilfsseil 7 auf der Seiltrommel 21 aufgespult. Bei Zug am Hilfsseil 7 wird Hubseil 26 ausgespult und Zugseil 3 auf der Seiltrommel 21 aufgespult.

Der Laufwagen 20 kann nun vorteilhafterweise auch ohne Hilfsseil 7 im 2-Seilbetrieb betrieben werden, was vor allem beim Bergaufseilen Anwendung findet, wobei nun der Elektromotor 18 die Seiltrommel 21 für die Ausspülung des Hubseiles 26 antreibt. Dabei wird auch Zugseil 3 auf der Seiltrommel 21 im zugehörigen Zugseilfach 24 aufgespult. Zum Zuziehen des Hubseiles 26 und Anheben der Last wird nun bei am Tragseil 5 fixiertem Laufwagen 20 am Zugseil 3 gezogen, sodass das Zugseil 3 von der Seiltrommel 21 abgespult wird. Die dadurch erzwungene Drehung der Seiltrommel 21 spult nun das Hubseil 26 auf der Seiltrommel 21 auf und zieht bzw. hebt die Last zum Laufwagen 20. Die Anordnung der Seilfächer ist variabel. So kann sich entgegen der dargestellten Ausführung beispielshafterweise das Hubseilfach auch auf einer Seite der Seiltrommel befinden, das Zugseilfach in der Mitte und das Hilfsseilfach auf der anderen Seite.

Bei dem Laufwagen 20 gemäß der Figuren 10 und 11 ist der Elektromotor18 in der Hohlwelle der Seiltrommel 21 angeordnet. Vorteilhafterweise ist zwischen Elektromotor 18 und Seiltrommel 21 ein Getriebe, beispielsweise ein mehrstufiges Planetengetriebe, angeordnet. Wie schon in der ersten Ausführung wird auch in dieser Ausführung der Elektromotor 18 bei Zuzug als Generator genutzt und lädt damit den Akku wieder auf.

Alternativ dazu kann der Elektromotor oder ein anderer Motor auch außerhalb der Seiltrommel 21 im Laufwagen 20 angeordnet sein und die Seiltrommel 21 beispielsweise über einen Ketten-, Riemen-, oder Zahnradtrieb antreiben. Alternativ zum Elektromotor kann auch ein Verbrennungsmotor oder ein Hydraulikmotor als Antriebsmotor verwendet werden.

Alternativ zur Bremse 25 der Seiltrommel 21 kann im Laufwagen 20 auch eine Zugseilklemme vorgesehen sein, die das Zugseil 3 im Laufwagen 20 fixiert, sodass es nicht von der Seiltrommel 21 ab- oder aufgespult werden kann.

Abschließend sind nochmals die Vorteile der erfindungsgemäßen Laufwagen 2 und 20 gegenüber den aus dem Stand der Technik bekannten Laufwagen unterschiedlicher Bauart zusammengestellt:

### Gegenüber Dieselmotorausspulern:

- Kein Dieselmotor nötig (Kosten, Lärm, Gewicht, Betankung, Abgase, Komplexität, Gefahr Motorschäden, Beschädigungsrisiko bei Laufwagenabstürzen, ....)

### Gegenüber reinen E-Ausspulern:

- Hohe Ausspulkraft durch das Hilfsseil für das Bergabseilen und Seilen in der Ebene auf Langstrecken, wo soundso im 3-Seilbetrieb geseilt wird und daher ein Hilfsseil vorhanden ist

### Gegenüber Hydraulikausspulem:

- Gewicht, Komplexität, Prüfpflicht Hydraulikspeicher (jährlich wiederkehrend), Kosten
- Gleichbleibende Ausspulkraft (bei Hydraulikspeichern reduziert sich der Hydraulikdruck je nach Füllstand im Hydraulikspeicher, die maximale Ausspulkraft steht daher nur beim Beginn der Ausspülung zur Verfügung und nimmt während dem Ausspulen laufend ab)
- Hohe Ausspulkraft für das Bergabseilen und Seilen in der Ebene auf Langstrecken, wo soundso im 3-Seilbetrieb geseilt wird und daher ein Hilfsseil vorhanden ist
- Unbegrenzte Ausspullänge (Zugsseillänge)

### Gegenüber reinen Ausspulern über das Hilfsseil:

- Aktiver Ausspuler auch beim Bergaufseilen im 2-Seilbetrieb (kein 3. Seil nötig)
- Unbegrenzte Ausspullänge
- Elektromotorisches Nachspulen des Hilfsseiles auf der Hilfsseiltrommel möglich

In einer bevorzugten Ausführungsvariante weist der Laufwagen 2 eine Bremse am Zugseil 3 auf, wie dies beispielsweise durch eine in Figur 9 dargestellte Trommelbremse 27 realisiert ist. Wenn der Laufwagen 2 durch die Schwerkraft entlang des Tragseils 5 beim Bergabseilen bergab fährt, dann entsteht im Zugseil 3 zwischen Laufwagen 2 und Seilkran 1 ein Durchhang, auch Seilsack genannt. Mit Hilfe der Tragseilklemme 11 wird die Bergabfahrt des Laufwagens 2 an dem Tragseil 5 beendet und der Laufwagen 2 wird an dem Zugseil 3 festgeklemmt. Beim anschließenden Ausspulen des Zugseiles 3 aus dem Laufwagen 2 reduziert sich dieser Durchhang des Zugseils 3, wodurch sich die Seilspannung im Zugseil 3 zwischen Laufwagen 2 und Seilkran 1 erhöht. Wird nun das Ausspulen des Zugseiles 3 unterbrochen, weil der Arbeiter beispielsweise über ein Hindernis klettern muss, dann muss ein Zurückziehen des Zugseiles 3 in Richtung des Seilkrans 1 verhindert werden. Das kann einerseits durch das Schließen der Zugseilklemme 12 erreicht werden, was aber den Druckspeicher belastet. Erfindungsgemäß ist die Trommelbremse 27 vorgesehen, die die Reibscheibe 13 direkt bremst und wesentlich weniger Drucköl benötigt. Die Bremse könnte alternativ auch an jeder anderen Stelle des Antriebsstranges zum Ausspulen des Zugseils 3 eingebaut sein, beispielsweise direkt an der Motorwelle insbesondere als elektromagnetische Bremse oder einer der Wellen des Kettentriebes oder der Hilfsseiltrommel 15. Alternativ könnte die Bremsfunktion auch vom Elektromotor 18 selbst erfüllt werden, nur ist hier das Bremsmoment im Stillstand zeitlich begrenzt, da ohne Drehung der Motorwelle keine Kühlung vorhanden ist.

## Patentansprüche

1. Laufwagen (2; 20) eines Seilkrans (1) zum Transport von Lasten entlang eines Tragseils (5) des Seilkrans (1), wobei der Laufwagen (2; 20), der in einem 2-Seilbetrieb von einem Zugseil (3) und in einem 3-Seilbetrieb zusätzlich von einem Hilfsseil (7) entlang des Tragseils (5) von einem Seilgerät (6) des Seilkrans (1) gezogen wird, einen Motor zum Ausspulen des Zugseils (3) oder eines Hubseils (26) aus dem Laufwagen (2) aufweist und eine Reibscheibe (13), die zur ausspulenden Bewegung des Zugseils (3), und/oder eine Hubseiltrommel (22), die zur ausspulenden Bewegung des Hubseils (26), vorgesehen ist und vom Motor mittelbar oder unmittelbar angetrieben wird, **dadurch gekennzeichnet, dass** der Laufwagen (2; 20) eine Hilfsseiltrommel (15; 24) zum Aufspulen des Hilfsseils (7) im 3-Seilbetrieb aufweist und, dass die Hilfsseiltrommel (15; 24) in Wirkverbindung mit der Reibscheibe (13) und/oder der Hubseiltrommel (22) und angetrieben durch das Hilfsseil (7) zusätzlich oder alternativ zum Motor zum Ausspulen des Zugseils (3) und/oder des Hubseils (26) vorgesehen ist.

2. Laufwagen (2) gemäß Anspruch 1, **dadurch gekennzeichnet, dass** der Motor und die Hilfsseiltrommel (15) gemeinsam im Eingriff mit der Reibscheibe (13) zum Ausspulen des Zugseils (3) vorgesehen sind.

3. Laufwagen (2; 20) gemäß Anspruch 1, **dadurch gekennzeichnet, dass** der Motor in Wirkverbindung mit der Hilfsseiltrommel (15; 24) zum Aufspulen des Hilfsseils (7) ausgebildet ist.

4. Laufwagen (2) gemäß Anspruch 3, **dadurch gekennzeichnet, dass** eine Zugseilklemme (12) zum Klemmen des Zugseils (3) und eine Hilfsseilklemme (16) zum Sperren der Drehung der Hilfsseiltrommel (15) vorgesehen sind, wobei beim Aufspulen des Hilfsseils (7) die Zugseilklemme (12) gesperrt und die Hilfsseilklemme (16) geöffnet ist.

5. Laufwagen (2; 20) gemäß einem der Ansprüche 1 bis 4, **dadurch gekennzeichnet, dass** der Motor durch einen Elektromotor (18) und insbesondere durch einen Nabenmotor gebildet ist.

6. Laufwagen (2) gemäß einem der Ansprüche 1 bis 5, **dadurch gekennzeichnet, dass** der Motor mit der Reibscheibe (13) und/oder der Hilfsseiltrommel (15) über einen Kettentrieb, Riementrieb oder Zahntrieb in Wirkverbindung gebracht ist.

7. Laufwagen (2) gemäß einem der Ansprüche 1 bis 6, **dadurch gekennzeichnet, dass** eine über Funksignale steuerbare Steuereinrichtung vorgesehen ist, die zum Ein- und Ausschalten des Motors und zum Ein- und Auskuppeln einer schaltbaren Kupplung zwischen der Reibscheibe (13) und der Hilfsseiltrommel (15) ausgebildet ist.

8. Laufwagen (2) gemäß einem der Ansprüche 1 bis 6, **dadurch gekennzeichnet, dass** die Reibscheibe (13) und die Hilfsseiltrommel (15) einstückig ausgebildet sind.

9. Laufwagen (2) gemäß einem der Ansprüche 1 bis 6, **dadurch gekennzeichnet, dass** die Reibscheibe (15) eine V-förmige Nut und zumindest eine Anpressrolle (14) zur Reib-Führung des Zugseils (3) aufweist.

10. Laufwagen (20) gemäß Anspruch 1, **dadurch gekennzeichnet, dass** eine Zugseiltrommel (23) zum Aufspulen des Zugseils (3) vorgesehen ist.

11. Laufwagen (20) gemäß Anspruch 10, **dadurch gekennzeichnet, dass** die Zugseiltrommel (23) und die Hilfsseiltrommel (24) und die Hubseiltrommel (22) einstückig ausgebildet sind.

12. Laufwagen (2) gemäß einem der Ansprüche 1 bis 11, **dadurch gekennzeichnet, dass** eine Bremse, insbesondere Trommelbremse (27) im Antriebsstrang zum Ausspulen des Zugseils (3) vorgesehen ist, um beim Bergabseilen ein durch die Schwerkraft bedingtes Zurückziehen des Zugseiles (3) in Richtung des Seilkrans (1) bei am Tragseil (5) mit einer Tragseilklemme (11) fixierten Laufwagen (2) zu verhindern.

13. Laufwagen (2) gemäß Anspruch 12, **dadurch gekennzeichnet, dass** die Trommelbremse (27) zum Bremsen der Reibscheibe (13) ausgebildet ist.

## Claims

1. A carriage (2; 20) of a cable crane (1) for transporting loads along a carrying rope (5) of the cable crane (1), wherein the carriage (2; 20), which is pulled along the carrying rope (5) by a rope device (6) of the cable crane (1) via a pull rope (3) in a 2-rope operation and additionally via an auxiliary rope (7) in a 3-rope operation , comprises a motor for unwinding the pull rope (3) or a hoist rope (26) from the carriage (2) and a friction disk (13), which is provided for the unwinding movement of the pull rope (3), and/or a hoist rope drum (22), which is provided for the unwinding movement of the hoist rope (26) and is driven directly or indirectly by the motor, **characterized in that** the carriage (2; 20) comprises an auxiliary rope drum (15; 24) for winding the auxiliary rope (7) in a 3-rope operation and **in that** the auxiliary rope drum (15; 24) is operatively connected to the friction disk (13) and/or the hoist rope drum (22) and, being driven by the auxiliary rope (7), is provided in addition to or as an alternative to the motor for unwinding the pull rope (3) and/or the hoist rope (26).

2. A carriage (2) according to claim 1, **characterized in that** the motor and the auxiliary rope drum (15) are provided jointly engaged with the friction disk (13) for unwinding the pull rope (3).

3. A carriage (2; 20) according to claim 1, **characterized in that** the motor,being operatively connected to the auxiliary rope drum (15; 24), is configured for winding the auxiliary rope (7).

4. A carriage (2) according to claim 3, **characterized in that** a pull rope clamp (12) for clamping the pull rope (3) and an auxiliary rope clamp (16) for locking the rotation of the auxiliary rope drum (15) are provided, with the pull rope clamp (12) being locked and the auxiliary rope clamp (16) being opened when the auxiliary rope (7) is being wound.

5. A carriage (2; 20) according to any of claims 1 to 4, **characterized in that** the motor is formed by an electric motor (18) and in particular by a hub motor.

6. A carriage (2) according to any of claims 1 to 5, **characterized in that** the motor is operatively connected to the friction disk (13) and/or the auxiliary rope drum (15) via a chain drive, a belt drive or a gear drive.

7. A carriage (2) according to any of claims 1 to 6, **characterized in that** a control device controllable via radio signals is provided, which is configured for turning on and off the motor and for engaging and disengaging a switchable clutch between the friction disk (13) and the auxiliary rope drum (15).

8. A carriage (2) according to any of claims 1 to 6, **characterized in that** the friction disk (13) and the auxiliary rope drum (15) are formed in one piece.

9. A carriage (2) according to any of claims 1 to 6, **characterized in that** the friction disk (15) has a V-shaped groove and at least one pressure roller (14) for frictionally guiding the pull rope (3).

10. A carriage (20) according to claim 1, **characterized in that** a pull rope drum (23) for winding the pull rope (3) is provided.

11. A carriage (20) according to claim 10, **characterized in that** the pull rope drum (23) and the auxiliary rope drum (24) and the hoist rope drum (22) are formed in one piece.

12. A carriage (2) according to any of claims 1 to 11, **characterized in that** a brake, in particular a drum brake (27), is provided in the drive train for unwinding the pull rope (3) in order to prevent a retraction of the pull rope (3) in the direction of the cable crane (1) during downhill yarding, the retraction being caused by gravity, with the carriage (2) being fixed at the carrying rope (5) with a carrying rope clamp (11).

13. A carriage (2) according to claim 12, **characterized in that** the drum brake (27) is configured for decelerating the friction disk (13).

## Revendications

1. Chariot (2 ; 20) d'une grue à câbles (1) pour le transport de charges le long d'un câble porteur (5) de la grue à câbles (1), lequel chariot (2 ; 20), qui est tiré dans un fonctionnement à 2 câbles par un câble de traction (3) ainsi que dans un fonctionnement à 3 câbles par un câble auxiliaire (7) le long du câble porteur (5) d'un dispositif de câbles (6) de la grue à câbles (1), comporte un moteur pour le déroulement du câble de traction (3) ou d'un câble de levage (26) hors du chariot, ainsi qu'un disque de friction (13) qui est prévu pour le mouvement de déroulement du câble de traction (3) et/ou un tambour de câble de levage (22) prévu pour le mouvement de déroulement du câble de levage (26) qui sont entraînés directement ou indirectement par le moteur, **caractérisé en ce que** ce chariot (2 ; 20) comporte un tambour de câble auxiliaire (15 ; 24) pour le déroulement du câble auxiliaire (7) en fonctionnement à 3 câbles et que le tambour de câble auxiliaire (15 ; 24) est prévu en liaison active avec le disque de friction (13) et/ou le tambour de câble de levage (22) et entraîné par le câble auxiliaire (7) en plus ou à la place du moteur pour le déroulement du câble de traction (3) et/ou du câble de levage (26).

2. Chariot (2) selon la revendication 1, **caractérisé en ce que** le moteur et le tambour de câble auxiliaire (15) sont prévus en prise ensemble avec le disque de friction (13) pour le déroulement du câble de traction (3).

3. Chariot (2; 20) selon la revendication 1, **caractérisé en ce que** le moteur est configuré en liaison active avec le tambour de câble auxiliaire (15 ; 24) pour le déroulement du câble auxiliaire (7).

4. Chariot (2) selon la revendication 3, **caractérisé en ce que** sont prévus un serre-câble de traction (12) pour le serrage du câble de traction (3) et un serre-câble auxiliaire (16) pour le blocage de la rotation du tambour à câble auxiliaire (15), le serre-câble de traction (12) étant bloqué et le serre-câble auxiliaire (16) étant ouvert lors du déroulement du câble auxiliaire (7).

5. Chariot (2 ; 20) selon une des revendications 1 à 4, **caractérisé en ce que** le moteur est constitué par un moteur électrique (18) et en particulier par un moteur à moyeu.

6. Chariot (2) selon une des revendications 1 à 5, **caractérisé en ce que** le moteur est mis en liaison active avec le disque de friction (13) et/ou le tambour de câble auxiliaire (15) par une transmission à chaîne, une transmission à courroie ou un engrenage.

7. Chariot (2) selon une des revendications 1 à 6, **caractérisé en ce qu'**est prévu un dispositif de commande contrôlable par des signaux radio qui est configuré pour l'accouplement et le désaccouplement d'un raccord commutable entre le disque de friction (13) et le tambour de câble auxiliaire (15).

8. Chariot (2) selon une des revendications 1 à 6, **caractérisé en ce que** le disque de friction (13) et le tambour de câble auxiliaire (15) sont formés d'une pièce.

9. Chariot (2) selon une des revendications 1 à 6, **caractérisé en ce que** le disque de friction (15) présente une rainure en forme de V et au moins un rouleau presseur (14) pour le guidage par friction du câble de traction (3).

10. Chariot (20) selon la revendication 1, **caractérisé en ce qu'**un tambour de câble de traction (23) est prévu pour le déroulement du câble de traction (3).

11. Chariot (20) selon une la revendication 10, **caractérisé en ce que** le tambour de câble de traction (23), le tambour de câble auxiliaire (24) et le tambour de câble de levage (22) sont formés d'une pièce.

12. Chariot (2) selon une des revendications 1 à 11, **caractérisé en ce qu'**un frein, en particulier un frein à tambour (27), est prévu dans la chaîne d'entrainement pour le déroulement du câble de traction (3), pour empêcher en descente un retrait du câble de traction (3) en direction de la grue à câbles (1) sous l'effet de la pesanteur, avec un chariot (2) fixé au câble de traction (5) avec un serre-câble de traction (11).

13. Chariot (2) selon la revendication 12, **caractérisé en ce que** le frein à tambour (27) est configuré pour le freinage du disque de friction (13).
